# EUROPEAN PATENT SPECIFICATION

(11) **EP 3 489 480 B1**
(45) Date of publication and mention of the grant of the patent: **21.04.2021**
(21) Application number: 17831370.6
(22) Date of filing: 20.07.2017
(51) Int. Cl.: F01N 3/28, F01N 3/20

(54) **SCR MIXER AND SCR DEVICE COMPRISING SAME**
SCR-MISCHER UND SCR-VORRICHTUNG DAMIT
MÉLANGEUR SCR ET DISPOSITIF SCR LE COMPRENANT

(30) Priority: 20.07.2016 KR 20160092225
(43) Date of publication of application: 29.05.2019
(73) Proprietor: Yungjin Enterprise Co., Ltd., Ansan-si, Gyeonggi-do 15608 (KR)
(72) Inventor: PARK, Seoung Zoo, Yongin-si Gyeonggi-do 16988 (KR); SEOL, Jin Hwan, Hwaseong-si Gyeonggi-do 18427 (KR)
(74) Representative: Ter Meer Steinmeister & Partner
(86) International application number: PCT/KR2017/007839
(87) International publication number: WO 2018/016897

(56) References cited:
- WO-A1-2005/001252
- WO-A1-2012/053960
- WO-A1-2014/098729
- JP-A- 2009 013 862
- JP-A- 2009 013 862
- JP-A- 2013 545 009
- JP-B2- 5 808 783
- KR-A- 20130 140 001
- KR-A- 20130 140 014

## Description

### [Technical Field]

The present invention relates to an SCR mixer for mixing urea with exhaust gas, an SCR device including the same, and more particularly a device using for an exhaust gas post-treatment system of a diesel engine, which may remove nitrogen oxide and diesel particulate matter contained in exhaust gas from an engine by using a catalyst and a filter.

### [Background Art]

In general, diesel engines are widely used in various industrial fields, such as vehicles, ships and general industry, based on the excellent reliability thereof, and demand for diesel engines is continuously increasing because they can operate so as to output high power under a high load.

However, in many advanced countries, diesel vehicles are recognized as the main cause of atmospheric pollution, and accounting for 40% of total atmospheric pollution.

In order to cope with this situation, many countries are tightening regulations on exhaust gas from diesel engines. Atmospheric pollution due to diesel vehicles is mainly caused by nitrogen oxide (NOx) and particulate matter (PM).

In order to reduce diesel particulate matter (PM) and nitrogen oxide (NOx), which are pollutants contained in engine exhaust gas, exhaust gas post-treatment devices, such as a Diesel Oxidation Catalyst (DOC), a Diesel Particulate matter Filter (DPF) and a Selective Catalyst Reduction (SCR), are applied to vehicles.

The DOC functions to oxidize total hydrocarbon and carbon monoxide contained in exhaust gas and to oxidize nitrogen monoxide into nitrogen dioxide, and the DPF functions to purify particulate matter through a chemical conversion process.

The SCR functions such that a reducing agent injected in the flow direction of exhaust gas through an injector is hydrolyzed into ammonia (NH3) by the heat of the exhaust gas, and nitrogen oxide is reduced to nitrogen gas (N₂) and water (H₂O) through catalytic reaction of nitrogen oxide and ammonia contained in the exhaust gas. A urea solution is mainly used as the reducing agent. In the present disclosure, the urea solution includes not only the urea solution itself but also a reducing agent in a broad meaning.

In order to effectively reduce nitrogen oxide, it is important that an injected reducing agent is evenly mixed with the exhaust gas. If not, a reduction rate is such lowered that nitrogen oxide is discharged into the air and some of the injected reducing agent that is not mixed with the exhaust gas touches an inner wall of an exhaust system and leaves hardened deposits thereon.

In general, in order to cause a reducing agent to be evenly mixed with exhaust gas, a mixing module is used. The mixing module serves to increase the injection pressure of a reducing agent through an injector so as to respond to tighter emissions (EM) standards, thereby increasing the injection speed of the reducing agent due to the increase in the injection pressure.

To this end, as is already known through Korean Patent Laid-open Publication No. 2012-0064345 (entitled DOSING MODULE FOR EXHAUST GAS POST-TREATMENT SYSTEM OF VEHICLES), in the prior art, a guide member, which has therein a plurality of holes, is provided inside a mixing module in order to prevent a wall-wetting phenomenon.

However, in spite of such a guide member and a baffle member, there is still a problem in that the fluidity of mixed gas is lowered due to structural limitations, resulting in solidification of a reducing agent and deterioration in purification efficiency.
JP 2009 013 862 A relates to an exhaust emission control device having a catalyst arranged in an exhaust passage of the internal combustion engine, and a reducing agent supply device arranged in the exhaust passage on the upstream side of the catalyst and supplying the reducing agent in exhaust gas. The exhaust passage is constituted of a double structure of an inside passage and an outside passage surrounding the inside passage in at least a part of the exhaust passage on the upstream side of the catalyst. The exhaust gas respectively flows to the inside passage and the outside passage, and at least a part of the outside passage is a passage for spirally turning around the inside passage, and the reducing agent supply device supplies the reducing agent in the outside passage.
WO 2014/098729 A1 relates to an arrangement to insert a liquid medium into exhausts from a combustion engine, comprising a mixing chamber intended to be perfused by exhausts and de-limited in a radial direction outwards by a first tubular metal wall, and an injection element for injection of the liquid medium as a spray into the mixing chamber, and an exhaust channel extending along the outside of the first tubular wall. The exhaust channel is delimited in a radial direction outwards by a second tubular wall, which guides the exhausts flowing through the exhaust channel so that they pass on the outside of the wall section of the first tubular wall which is intended to be impacted by said spray.
WO 2005/001252 A1 relates to an exhaust gas aftertreatment installation, especially for use near the internal combustion engine of an automobile, comprising a housing, having a catalytic converter, surrounded by at least one return flow area 6 through which the fluid can flow in a substantially free manner. Said catalytic converter has a first face, a second face and cavities through which a fluid can flow in a forward flow direction. The first face of the at least one catalytic converter is linked with at least one gas supply pipe and at least one gas discharge pipe is linked with the at least one return flow area in a substantially gas-tight manner. At least one flow deflection means effects deflection of the fluid from the cata-lytic converter to the return flow area of the housing through which the fluid can flow in a substantially free manner.
WO 2012/053960 A1 relates to an arrangement for introducing a liquid medium into exhaust gases from a combustion engine, comprising a line intended to have exhaust gases flow through it, an injection chamber bounded in radial directions by a tubular wall, an injection means for injecting the liquid medium into the injection chamber, a mixing duct to which the injection chamber has an outlet for delivering exhaust gases, a bypass duct which has an outlet via which it is connected to the mixing duct, and an endwall situated at the injection chamber's downstream end and demarcating the chamber from the mixing duct, such that the chamber's outlet is situated at the periphery of the endwall.

The information disclosed in this Background Art section is only for enhancement of understanding of the general background of the invention and should not be taken as an acknowledgement or any form of suggestion that this information forms the prior art already known to a person skilled in the art.

### [Disclosure]

### [Technical Problem]

The above identified objectives are solved by the features of the independent claim. Advantageous embodiments are derived from the respective dependent claims.

It is an object of the present invention to provide an SCR mixer that has a double structure formed in a new manner so as to efficiently mix a reducing agent with exhaust gas and prevent solidification of the reducing agent, and an SCR device including the same.

### [Technical Solution]

An SCR mixer according to the present invention for accomplishing the above object includes a first space, a second space, an injection portion, and a first changing unit.

The first space is a space into which at least a portion of exhaust gas is introduced.

The second space is a space into which at least another portion of the exhaust gas is introduced, and is formed so as to surround the first space.

The injection portion communicates with the first space in order to inject a reducing agent into the first space.

The first changing unit changes the flow of the exhaust gas that is introduced into the first space.

The first changing unit serves to change the flow of the exhaust gas, which is introduced through an inlet of the SCR device and flows toward an outlet, so that the exhaust gas swirls in a circumferential direction. Since the exhaust gas flows into the first space while swirling in the circumferential direction, the time for which the exhaust gas stays in the first space is increased, and mixing with the reducing agent is well achieved due to the swirling motion, thereby improving the mixing effect.

The first changing unit includes a swirl generator configured to swirl the exhaust gas.

The swirl generator may include one or more swirl plates, each having a semi-circular shape, and the swirl plates may be installed on the upper inner circumferential surface of the inner shell while being arranged so as to be misaligned from each other to form an entrance. The flow of the exhaust gas may be changed so as to swirl through the entrance to thus be well mixed with the reducing agent in the inner shell.
In addition, the SCR mixer is configured such that the second space communicates with the first space so that the exhaust gas introduced into the second space flows into the first space.

In addition, a second changing unit, which is configured to change the flow of the exhaust gas that is introduced into the second space, may be further included inside the second space.

The second changing unit may include a plurality of vanes configured to change the flow of the exhaust gas in order to cause the exhaust gas to flow in a slanted direction in the second space.

The SCR mixer may further include an inner shell formed in a cylindrical shape in order to separate the first space and the second space from each other. The inner shell may have the injection portion in the outer circumferential surface thereof.

In addition, the SCR mixer may further include an outer shell configured to surround the second space and including a through-hole through which the injection portion passes. The outer shell includes a first outer shell and a second outer shell. The first outer shell includes a first coupling portion, and the second outer shell includes a second coupling portion, which is formed so as to be coupled to the first coupling portion.

Each of the vanes includes a slanted wall. The slanted wall may include an inner welding blade configured to be welded to the inner shell and an outer welding blade configured to be welded to the outer shell. The outer shell may have therein a plurality of welding holes for welding the outer welding blade from the outside.

The SCR mixer may further include a guide member. The guide member guides the exhaust gas, having flowed downwards in the second space, to flow upwards into the first space.

The center portion of the guide member protrudes upwards in the inner shell, and the edge portion of the guide member is coupled to the inner circumferential surface of the outer shell.

An SCR device, which includes the SCR mixer having the above-described structure, may include a DOC, the SCR mixer, and an SDPF. The SCR mixer may be installed between the DOC and the SDPF.

### [Advantageous cffccts]

According to the SCR mixer having the above-described structure, a reducing agent is injected into the inner shell heated by exhaust gas, thereby increasing atomization and evaporation of the reducing agent droplets and minimizing the deposition of the reducing agent on the inner surface of the inner shell.

In addition, exhaust gas is mixed with the reducing agent while swirling inside the inner shell and is also mixed with exhaust gas that is introduced between the outer shell and the inner shell and flows upwards into the inner shell from the region below the inner shell, thereby causing the reducing agent to be evenly mixed with the exhaust gas in the mixer.

### [Description of Drawings]

FIG. 1 is a view illustrating an SCR mixer according to an embodiment of the present invention.
FIG. 2 is a view illustrating the cross section of the SCR mixer according to the embodiment of the present invention.
FIG. 3 is a view illustrating an SCR device including the SCR mixer according to the embodiment of the present invention.
FIG. 4 is a view illustrating the cross section of the SCR device illustrated in FIG. 3.
FIG. 5 is a view illustrating a vane of the SCR mixer according to the embodiment of the present invention.
FIG. 6 is a view illustrating a swirl generator and a swirl plate of the SCR mixer according to the embodiment of the present invention.

### [Embodiment]

Hereinafter, an SCR mixer 100 according to an exemplary embodiment of the present invention will be described with reference to the accompanying drawings.

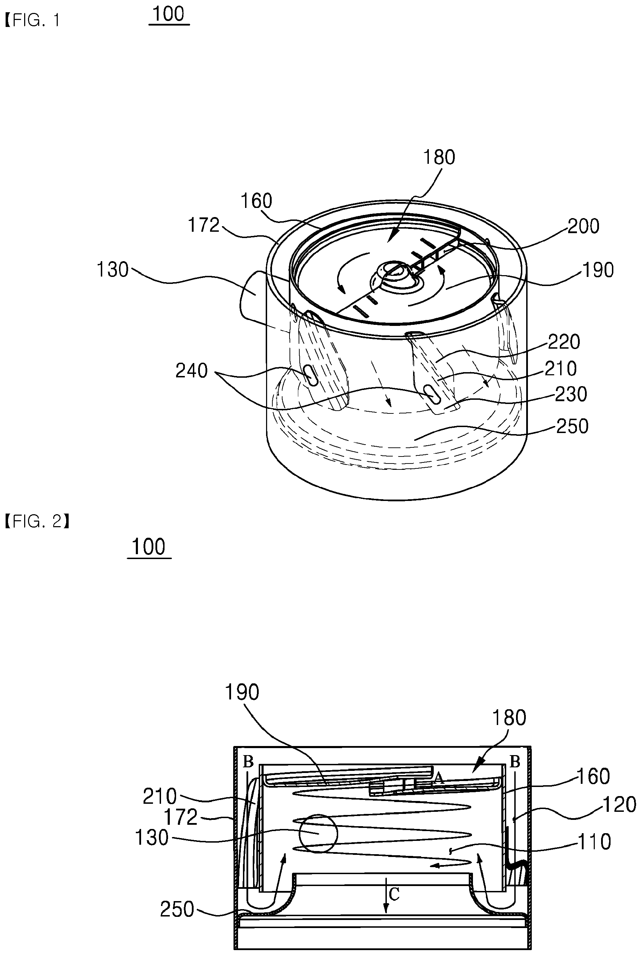

FIG. 1 is a view illustrating the SCR mixer 100 according to an embodiment of the present invention. FIG. 2 is a view illustrating the cross section of the SCR mixer 100 according to the embodiment of the present invention. The SCR mixer will be described below with reference to FIGs. 1 and 2.

The SCR mixer 100 according to the present invention includes a first space 110, a second space 120, an injection portion 130, and a first changing unit.

Referring to FIG. 2, the first space 110 is a space into which at least a portion of exhaust gas is introduced.

The second space 120 is a space into which at least another portion of the exhaust gas is introduced, and is formed so as to surround the first space 110.

The SCR mixer 100 includes an inner shell 160, which is formed in a cylindrical shape in order to separate the first space 110 and the second space 120 from each other, and the injection portion 130 is formed at the outer circumferential surface of the inner shell 160.

In addition, the SCR mixer 100 includes an outer shell, which surrounds the second space 120 and has therein a through-hole through which the injection portion 130 passes. The outer shell, as described later, may include a first outer shell 171, to which a DOC is installed, and a second outer shell 172, to which the SCR mixer and an SDPF are installed.

The injection portion 130 is formed so as to communicate with the first space 110 in order to inject a reducing agent into the first space 110. This injection portion 130 is formed in a shape of pipe, one end of which is exposed outside the outer shell and the opposite end of which is connected to the inner shell 160 so as to communicate with an inside of the inner shell 160.

In this embodiment, the reducing agent may be at least one of a commonly used urea solution or ammonia.

The first changing unit changes the flow of the exhaust gas that is introduced into the first space 110. In this embodiment, the first changing unit includes a swirl generator 180 configured to swirl the exhaust gas.

Referring to FIG. 1, the swirl generator 180 includes two swirl plates 190, each of which has a semi-circular shape and which are installed on the upper inner circumferential surface of the inner shell 160. The swirl plates 190 are arranged so as to be misaligned from each other in order to form an entrance 200. The swirl plates 190 may generate a swirl (in the direction A in FIG. 2) by changing the flow of the exhaust gas that passes through the entrance 200, thereby enabling effective mixing of the reducing agent in the inner shell 160.

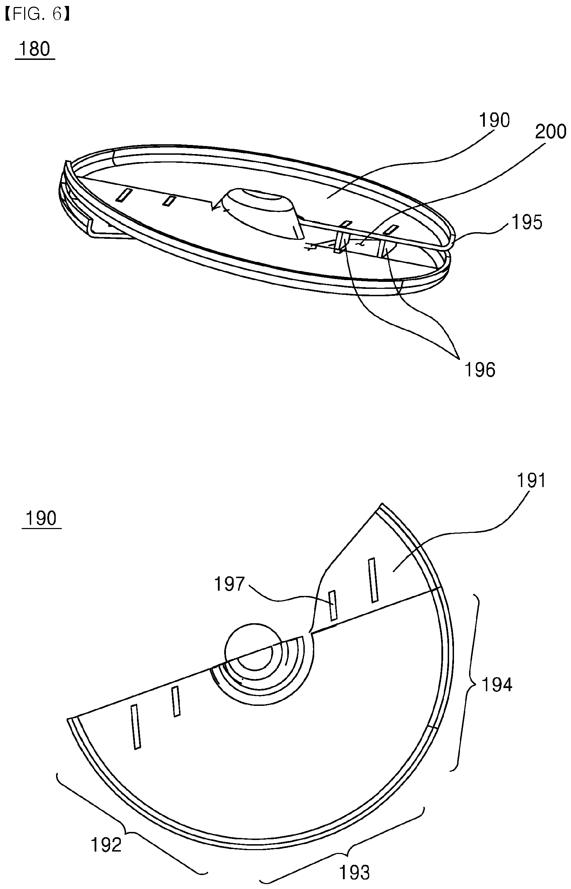

In the swirl generator 180 for generating the swirl, as illustrated in FIG. 6, the semi-circular-shaped swirl plate 190 may include an extending portion 191, which extends from a portion of the swirl plate 190 in the circumferential direction thereof, and a attaching portion 195, which protrudes at an circumferential edge of the swirl plate 190 in the longitudinal direction thereof.

The attaching portion 195 may be attached to the inner circumferential surface of the inner shell 160. The diameter of the swirl plate 190 may be the same as the inner diameter of the inner shell 160.

The swirl plate 190 may include a ceiling portion 192, a connecting portion 193 and a floor portion 194. The connecting portion 193 is formed between the ceiling portion 192 and the floor portion 194. When the two swirl plates 190 are coupled to each other, as illustrated in FIGs. 1 and 6, the ceiling portion 192 serves as the upper portion of the entrance 200, and the floor portion 194 serves as the lower portion of the entrance 200. The extending portion 191 of one swirl plate 190 is located below the ceiling portion 192 of the other swirl plate 190 and extends into the entrance 200. Therefore, the swirl plate 190 has a structure in which the ceiling portion 192 is located at a higher position than the floor portion 194, and the connecting portion 193 connects the floor portion 193 and the ceiling portion 192, which are located at different heights from each other, to each other.

In addition, as illustrated in FIGs. 1 and 6, the swirl generator 180 having two entrances 200 is obtained by assembling the two same shaped swirl plates 190 in such a manner that one of the two covers the region corresponding to 180 degrees and the other covers the region corresponding to the remaining 180 degrees. Each of the swirl plates 190 additionally includes at least one support wall 196, which is located in the entrance 200 so that the two swirl plates 190 arc supported by cach other. The at least one support wall 196 may be fitted into a corresponding support-wall-fixing recess 197, and a plurality of support-wall-fixing recesses 197 may be formed in the ceiling portion 192 and the extending portion 191. A plurality of support walls 196 may be included so as to be spaced apart from each other at constant intervals, so that the generation of the swirl is enhanced.

This embodiment employs the swirl plates 190 to generate a swirl. However, any other various structures may be used, so long as the structures are capable of generating a swirl.

In addition, the SCR mixer 100 may further include a second changing unit, which is provided in the second space 120 in order to change the flow of the exhaust gas that is introduced into the second space 120. The second changing unit may include a plurality of vanes 205 configured to change the flow of the exhaust gas so that the exhaust gas flows in a slanted direction in the second space 120.

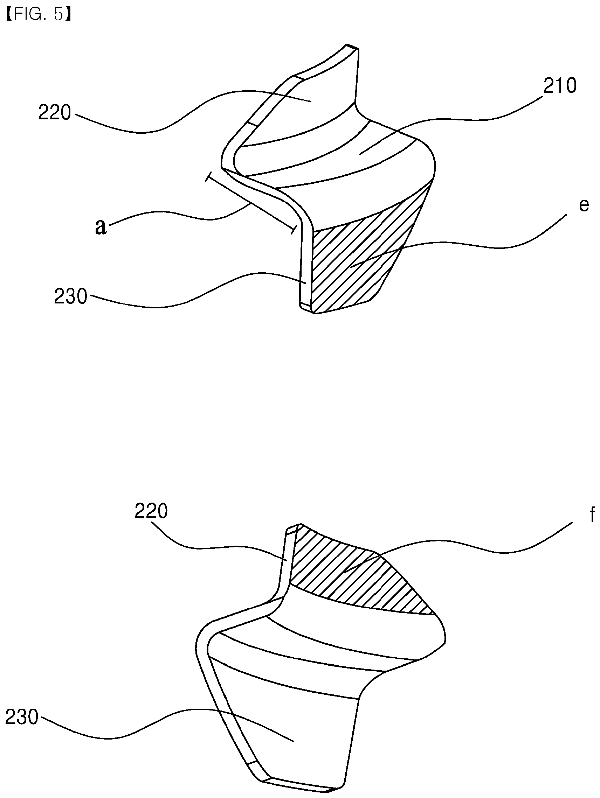

Referring to FIGs. 1 and 5, each of the vanes 205 includes a slanted wall 210, an inner welding blade 220, and an outer welding blade 220.

The inner welding blade 220 may be welded to the inner shell 160, and the outer welding blade 230 may be welded to the second outer shell 172. In this embodiment, the inner welding blade 220 and the outer welding blade 230, as illustrated in FIG. 5, are bent in opposite directions to each other. However, in another embodiment, the outer welding blade 230 and the inner welding blade 220 may be bent in the same direction as each other.

Specifically, referring to FIG. 5, the slanted wall 210 may have a width *a* that is equal to the gap between the inner shell 160 and the second outer shell 172. Thus, the slanted wall 210 is capable of supporting the inner shell 160 provided in the second outer shell 172. Further, as illustrated in FIG. 5, the inner welding blade 220 and the outer welding blade 230 may be formed so as to be curved in the circumferential direction of the inner shell 160 and the second outer shell 172 in order to be brought into close contact with the outer circumferential surface of the inner shell 160 and the inner circumferential surface of the second outer shell 172, respectively.

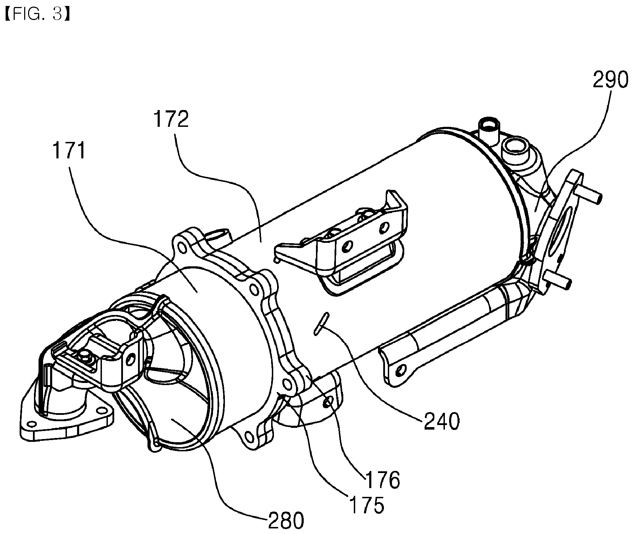

In addition, referring to FIGs. 1 and 3, the second outer shell 172 includes a plurality of welding holes 240 for welding the outer welding blade 230. Each of the welding holes 240 may be formed through the second outer shell 172 so that the portion e of the outer welding blade 230 that contacts the second outer shell 172 is visible, as illustrated in FIG. 5. Further, the outer surface *f* of the inner welding blade 220 may be welded to the outer circumferential surface of the inner shell 160.

The SCR mixer, as illustrated in FIG. 2, may be configured such that the second space 120 and the first space 110 communicate with each other so that the exhaust gas introduced into the second space 120 flows into the first space 110. To this end, the SCR mixer 100 may further include a flow guide member 250, which is provided below the inner shell 160. The flow guide member 250 guides the flow of the exhaust gas such that the exhaust gas, having flowed downwards in the second space 120, flows upwards into the first space 110 (refer to the direction B).

The center portion of the flow guide member 250 protrudes upwards in the inner shell 160, and the edge portion of the flow guide member 250 is coupled to the inner circumferential surface of the second outer shell 172. Further, the center portion of the flow guide member 250 has therein a hollow region, which functions as a flow passage to discharge the exhaust gas in the mixer to the outside of the mixer therethrough.

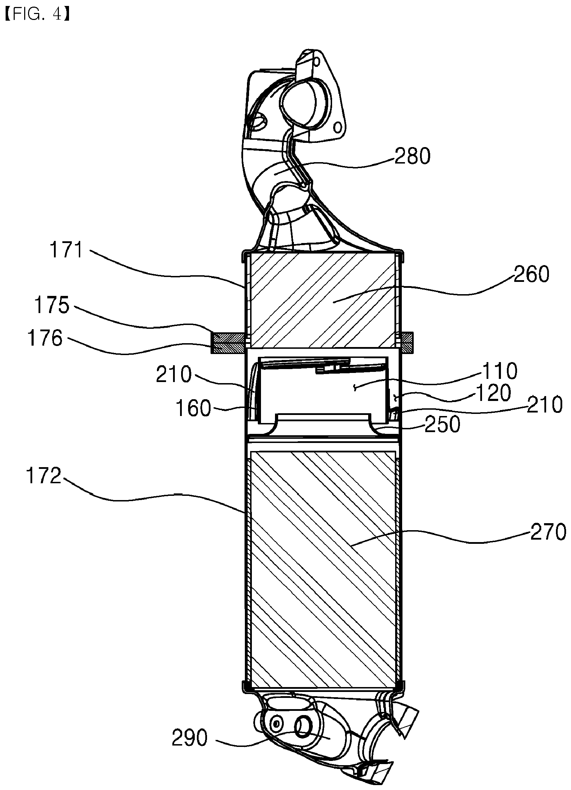

Referring to FIGs. 3 and 4, an SCR device, which includes the SCR mixer 100 having the above-described structure, includes a DOC 260, the SCR mixer 100, and an SDPF 270.

The DOC 260, the SCR mixer 100 and the SDPF 270, as described above, are installed to the outer shell, which includes the first outer shell 171 and the second outer shell 172. As illustrated in FIGs. 3 and 4, the first outer shell 171 may include a first coupling portion 175 formed on the outer circumferential surface thereof, and the second outer shell 172 may include a second coupling portion 176 formed on the outer circumferential surface thereof so as to correspond to the first coupling portion 175. The first coupling portion 175 and the second coupling portion 176 may be fastened by screws (or bolts).

The DOC 260 may be placed in the first outer shell 171, and the SCR mixer 100 and the SDPF 270 may be placed in the second outer shell 172. Since the DOC 260 and the SDPF 270 are well known to those skilled in the art, a detailed description thereof will be omitted.

The first outer shell 171 may be provided with an inlet 280, which is connected with an intake manifold, and the second outer shell 172 may be provided with an outlet 290, which is connected with a muffler.

Next, it will be explained how the exhaust gas is mixed in the SCR mixer 100 with reference to FIG. 2.

The exhaust gas is first purified by the DOC 260 and is then introduced into the SCR mixer 100 located below the DOC 260. The exhaust gas is divided so as to be respectively introduced into the first space 110 and the second space 120. A portion of the exhaust gas is swirled by the swirl generator 180 and is introduced into the first space 110. Another portion of the exhaust gas is introduced into the second space 120. At this time, the exhaust gas in the second space 120 flows downwards in a slanted direction due to the slanted wall 210 provided in the second space 120.

If the inner shell 160 was exposed outside and the surface thereof was cooled by an external temperature, a reducing agent injected into the inner shell 160 would be solidified and deposited on the inner wall of the inner shell 160. Therefore, the present invention is configured such that the inner shell 160 is surrounded by the exhaust gas introduced into the second space 120 and is thus maintained in the state of being heated by the heat of the exhaust gas, thereby preventing or minimizing the generation of reducing agent deposits.

The exhaust gas introduced into the second space 120 serves to prevent the inner shell 160 from being cooled and is guided by the slanted wall 210 to be moved to the flow guide member 250, which is provided in the lower portion of the SCR mixer 100. The flow guide member 250 guides the exhaust gas introduced into the second space 120 to flow into the first space 110.

In addition, as illustrated in FIG. 2, the exhaust gas having flowed downwards in the second space 120 is moved upwards into the inner shell 160 by the flow guide member 250 (refer to the direction B) and is mixed with the exhaust gas that swirls in the first space 110. Therefore, the SCR mixer 100, which is divided into the first space 110 and the second space 120, may have effects in that solidification of the reducing agent which would be caused with an outside exposed first space 110 is prevented and in that the exhaust gas is first mixed with the reducing agent while swirling in the first space 110 and is secondarily mixed with the exhaust gas introduced into the first space 110 from the second space 120, thereby causing the exhaust gas and the reducing agent to be evenly mixed with each other in a limited space.

The exhaust gas mixed with the reducing agent in the above-described manner is discharged in the direction C through a discharge passage formed in the center portion of the flow guide member 250 and moves to the SDPF 270.

While the present invention has been particularly shown and described with reference to specific embodiments thereof, it will be understood by those skilled in the art that the present invention may be variously modified and changed without departing from the technical idea of the present invention set forth in the following claims.

## Claims

1. An SCR mixer (100) comprising:
a first space (110) into which at least a portion of exhaust gas is introduced;
a second space (120) into which at least another portion of the exhaust gas is introduced, the second space (120) surrounding the first space (110); and
an injection portion (130) configured to inject a reducing agent into the first space (110),
**characterized in that:**
the SCR mixer further comprises a first changing unit configured to change a flow of the exhaust gas that is introduced into the first space (110), wherein the first changing unit includes a swirl generator (180) configured to swirl the exhaust gas and
the second space (120) communicates with the first space (110) in order to cause the exhaust gas introduced into the second space (120) to flow into the first space (110).

2. The SCR mixer according to claim 1, further comprising: a second changing unit configured to change a flow of the exhaust gas that is introduced into the second space (120).

3. The SCR mixer according to claim 2, wherein the second changing unit includes a plurality of vanes (205) configured to change the flow of the exhaust gas in order to cause the exhaust gas to flow in a slanted direction in the second space (120).

4. The SCR mixer according to claim 1, further comprising:
an inner shell (160) formed in a cylindrical shape in order to separate the first space (110) and the second space (120) from each other, the inner shell (160) having the injection portion (130) at an outer circumferential surface thereof; and
an outer shell configured to surround the second space (120), the outer shell including a through-hole through which the injection portion (130) passes.

5. The SCR mixer according to claim 3, wherein each of the vanes (205) includes a slanted wall (210), and
wherein the slanted wall (210) includes an inner welding blade (220) configured to be welded to the inner shell (160) and an outer welding blade (230) configured to be welded to the outer shell.

6. The SCR mixer according to claim 5, wherein the outer shell includes a plurality of welding holes (240) for welding the outer welding blade (230).

7. The SCR mixer according to claim 3, wherein the swirl generator (180) includes one or more swirl plates (190), each having a semi-circular shape,
wherein the swirl plates (190) are installed on an upper inner circumferential surface of the inner shell (160) while being arranged so as to be misaligned from each other to form an entrance (200), and
wherein the flow of the exhaust gas is changed so as to swirl through the entrance (200) to be efficiently mixed with the reducing agent in the inner shell (160).

8. The SCR mixer according to claim 1, further comprising a guide member (250) configured to guide the exhaust gas having flowed downwards in the second space (120) to flow upwards into the first space (110).

9. The SCR mixer according to claim 7, wherein a center portion of the guide member (250) protrudes upwards in the inner shell (160), and an edge portion of the guide member (250) is coupled to an inner circumferential surface of an outer shell.

10. An SCR device comprising:
a DOC (260);
a mixer (100) according to any of the preceding claims connected to the DOC (260); and
an SDPF (270) connected with the mixer (100).

## Patentansprüche

1. SCR-Mischer (100), der Folgendes umfasst:
einen ersten Raum (110), in den zumindest ein Anteil eines Abgases eingeleitet wird;
einen zweiten Raum (120), in den zumindest ein weiterer Anteil des Abgases eingeleitet wird, wobei der zweite Raum (120) den ersten Raum (110) umgibt; und
einen Einspritzabschnitt (130), der konfiguriert ist, ein Reduktionsmittel in den ersten Raum (110) einzuspritzen,
**dadurch gekennzeichnet, dass**:
der SCR-Mischer ferner eine erste Änderungseinheit umfasst, die konfiguriert ist, einen Strom des Abgases, das in den ersten Raum (110) eingeleitet wird, zu ändern, wobei die erste Änderungseinheit einen Verwirbelungsgenerator (180) enthält, der konfiguriert ist, das Abgas zu verwirbeln, und
der zweite Raum (120) mit dem ersten Raum (110) in Verbindung steht, um zu bewirken, dass das Abgas, das in den zweiten Raum (120) eingeleitet wird, in den ersten Raum (110) strömt.

2. SCR-Mischer nach Anspruch 1, der ferner Folgendes umfasst: eine zweite Änderungseinheit, die konfiguriert ist, einen Strom des Abgases, das in den zweiten Raum (120) eingeleitet wird, zu ändern.

3. SCR-Mischer nach Anspruch 2, wobei die zweite Änderungseinheit mehrere Lamellen (205) enthält, die konfiguriert sind, den Strom des Abgases zu ändern, um zu bewirken, dass das Abgas in einer schrägen Richtung in den zweiten Raum (120) strömt.

4. SCR-Mischer nach Anspruch 1, der ferner Folgendes umfasst:
eine Innenschale (160), die in einer zylindrischen Form ausgebildet ist, um den ersten Raum (110) und den zweiten Raum (120) voneinander zu trennen, wobei die Innenschale (160) an einer Außenumfangsfläche davon den Einspritzabschnitt (130) aufweist; und
eine Außenschale, die konfiguriert ist, den zweiten Raum zu umgeben, wobei die Außenschale ein Durchgangsloch enthält, durch das der Einspritzabschnitt (130) verläuft.

5. SCR-Mischer nach Anspruch 3, wobei die Lamellen (205) jeweils eine schräge Wand (210) aufweisen und
wobei die schräge Wand (210) eine innere Schweißlamelle (220), die konfiguriert ist, an die Innenschale geschweißt zu werden, und eine äußere Schweißlamelle (230), die konfiguriert ist, an die Außenschale geschweißt zu werden, enthält.

6. SCR-Mischer nach Anspruch 5, wobei die Außenschale mehrere Schweißlöcher (240) zum Schweißen der äußeren Schweißlamelle (230) enthält.

7. SCR-Mischer nach Anspruch 3, wobei der Verwirbelungsgenerator (180) eine oder mehrere Verwirbelungsplatten (190) enthält, die jeweils eine Halbkreisform aufweisen,
wobei die Verwirbelungsplatten (190) auf einer oberen Innenumfangsfläche der Innenschale (160) eingebaut sind, während sie derart angeordnet sind, dass sie nicht aufeinander ausgerichtet sind, derart, dass ein Zugang (200) gebildet wird, und
wobei der Strom des Abgases derart geändert wird, dass er durch den Zugang (200) wirbelt, damit er wirksam mit dem Reduktionsmittel in der Innenschale (160) gemischt wird.

8. SCR-Mischer nach Anspruch 1, der ferner ein Lenkungselement (250) umfasst, das konfiguriert ist, das Abgas, das im zweiten Raum (120) nach unten geströmt ist, derart zu lenken, dass es nach oben in den ersten Raum (110) strömt.

9. SCR-Mischer nach Anspruch 7, wobei ein Mittenabschnitt des Lenkungselements (250) nach oben in die Innenschale (160) vorsteht und ein Kantenabschnitt des Lenkungselements (250) mit einer Innenumfangsfläche einer Außenschale gekoppelt ist.

10. SCR-Vorrichtung, die Folgendes umfasst:
einen DOC (260);
einen Mischer (100) nach einem der vorhergehenden Ansprüche, der mit dem DOC (260) verbunden ist; und
einen SDPF (270), der mit dem Mischer (100) verbunden ist.

## Revendications

1. Mélangeur de réduction catalytique sélective, SCR (100) comportant :
un premier espace (110) dans lequel au moins une partie de gaz d'échappement est introduite ;
un second espace (120) dans lequel au moins une autre partie du gaz d'échappement est introduite, le second espace (120) entourant le premier espace (110) ; et
une partie d'injection (130) configurée pour injecter un agent réducteur dans le premier espace (110),
**caractérisé en ce que** :
le mélangeur SCR comporte en outre une première unité de changement configurée pour changer un écoulement du gaz d'échappement qui est introduit dans le premier espace (110), dans lequel la première unité de changement inclut un générateur de tourbillon (180) configuré pour faire tourbillonner le gaz d'échappement et
le second espace (120) communique avec le premier espace (110) afin d'amener le gaz d'échappement introduit dans le second espace (120) à s'écouler dans le premier espace (110).

2. Mélangeur SCR selon la revendication 1, comportant en outre : une seconde unité de changement configurée pour changer un écoulement du gaz d'échappement qui est introduit dans le second espace (120).

3. Mélangeur SCR selon la revendication 2, dans lequel la seconde unité de changement inclut une pluralité d'ailettes (205) configurées pour changer l'écoulement du gaz d'échappement afin d'amener le gaz d'échappement à s'écouler dans une direction inclinée dans le second espace (120).

4. Mélangeur SCR selon la revendication 1, comportant en outre :
une enveloppe intérieure (160) formée sous une forme cylindrique afin de séparer le premier espace (110) et le second espace (120) l'un de l'autre, l'enveloppe intérieure (160) ayant la partie d'injection (130) sur une surface circonférentielle extérieure de celle-ci ; et
une enveloppe extérieure configurée pour entourer le second espace (120), l'enveloppe extérieure incluant un trou traversant à travers lequel passe la partie d'injection (130).

5. Mélangeur SCR selon la revendication 3, dans lequel chacune des ailettes (205) inclut une paroi inclinée (210), et
dans lequel la paroi inclinée (210) inclut une lamelle de soudage intérieure (220) configurée pour être soudée à l'enveloppe intérieure (160) et une lamelle de soudage extérieure (230) configurée pour être soudée à l'enveloppe extérieure.

6. Mélangeur SCR selon la revendication 5, dans lequel l'enveloppe extérieure inclut une pluralité de trous de soudage (240) pour souder la lamelle de soudage extérieure (230).

7. Mélangeur SCR selon la revendication 3, dans lequel le générateur de tourbillon (180) inclut une ou plusieurs plaques de tourbillonnement (190), ayant chacune une forme semi-circulaire,
dans lequel les plaques de tourbillonnement (190) sont installées sur une surface circonférentielle intérieure supérieure de l'enveloppe intérieure (160) tout en étant agencées de manière à être désalignées les unes par rapport aux autres pour former une entrée (200), et
dans lequel l'écoulement du gaz d'échappement est changé de manière à tourbillonner à travers l'entrée (200) pour être efficacement mélangé avec l'agent réducteur dans l'enveloppe intérieure (160).

8. Mélangeur SCR selon la revendication 1, comportant en outre un élément de guidage (250) configuré pour guider le gaz d'échappement s'étant écoulé vers le bas dans le second espace (120) pour s'écouler vers le haut dans le premier espace (110).

9. Mélangeur SCR selon la revendication 7, dans lequel une partie centrale de l'élément de guidage (250) fait saillie vers le haut dans l'enveloppe intérieure (160), et une partie de bord de l'élément de guidage (250) est couplée à une surface circonférentielle intérieure d'une enveloppe extérieure.

10. Dispositif SCR comportant :
un catalyseur d'oxydation diesel, DOC (260) ;
un mélangeur (100) selon l'une quelconque des revendications précédentes relié au DOC (260) ; et
un filtre de matières particulaires diesel, SPF (270) relié au mélangeur (100).
